# EUROPÄISCHE PATENTSCHRIFT

(11) **EP 2 364 880 B1**
(45) Veröffentlichungstag und Bekanntmachung des Hinweises auf die Patenterteilung: **15.08.2018**
(21) Anmeldenummer: 11004710.7
(22) Anmeldetag: 20.03.2008
(51) Int. Cl.: B60R 9/06, B60R 9/10

(54) **Lastenträger für ein Kraftfahrzeug**
Load carrier for a motor vehicle
Support de charge pour un véhicule automobile

(30) Priorität: 23.03.2007 DE 102007014618; 29.03.2007 DE 102007015603
(43) Veröffentlichungstag der Anmeldung: 14.09.2011
(62) Teilanmeldung aus: 08005237.6
(73) Patentinhaber: WESTFALIA - Automotive GmbH, 33378 Rheda-Wiedenbrück (DE)
(72) Erfinder: Hermbusch, Gerhard, 33449 Langenberg (DE)
(74) Vertreter: Patentanwälte Bregenzer und Reule Partnerschaftsgesellschaft mbB

(56) Entgegenhaltungen:
- WO-A1-2006/110078
- DE-A1- 4 322 016
- DE-A1-102004 044 246
- FR-A- 809 094
- US-A- 5 460 304
- US-A- 6 152 341
- US-A1- 2002 005 423
- US-A1- 2004 011 837

## Beschreibung

Die Erfindung betrifft einen Lastenträger für ein Kraftfahrzeug, insbesondere einen Personenkraftwagen, mit einer Tragstruktur zum Tragen einer Last, die in einer Arbeitsstellung des Lastenträgers nach hinten vor einen Heckbereich des Kraftfahrzeugs vorsteht, gemäß dem Oberbegriff des Anspruches 1.

Ein derartiger Lastenträger ist beispielsweise in US 5,527,146 erläutert.

Lastenträger, beispielsweise Fahrradträger, behindern im am Kraftfahrzeugzeug montierten Zustand die Zugänglichkeit zum Heckbereich des Kraftfahrzeuges. Beispielsweise lässt sich eine Heckklappe oder Hecktür des Kraftfahrzeuges nicht mehr öffnen, wenn eine Last auf dem Lastenträger bzw. dessen Trageanordnung aufliegt. Fahrräder sind beispielsweise im Weg. Dieses Problem tritt insbesondere dann auf, wenn die Heckklappe oder Hecktür relativ weit ausschwingt, die z.B. bei Kleinbussen oder Vans.

Zur Lösung dieser Problemstellung ist es bekannt, den Lastenträger als Ganzes beispielsweise nach unten zu schwenken. Der Lastenträger bleibt zwar beispielsweise an einer Anhängekupplung des Kraftfahrzeugs befestigt, wird aber mit seiner gesamten Tragstruktur nach unten geschwenkt.

Eine solche Konstruktion ist z.B. aus Sicherheitsgründen problematisch, da der Lastenträger in der Fahrstellung verriegelt werden muss, damit er nicht beim Fahrbetrieb unbeabsichtigt nach unten schwenkt. Ferner wird die Betätigung dadurch erschwert, dass der recht schwere Lastenträger geschwenkt werden muss.

Es ist daher die Aufgabe der vorliegenden Erfindung, einen betriebssicheren, einfach handhabbaren Lastenträger vorzuschlagen.

Zur Lösung der Aufgabe ist ein Lastenträger gemäß der technischen Lehre des Anspruchs 1 vorgesehen.

Die Last kann auf der Trageanordnung verbleiben. Die Trageanordnung umfasst beispielsweise einen Fahrradträger, eine Trägerplattform zum Auflegen von Lasten oder dergleichen.

Ein Grundgedanke der Erfindung ist, eine Tragstruktur sozusagen fahrzeugfest zu belassen, beispielsweise nach hinten vorstehende Träger oder Trägerarme, und auf dieser Tragstruktur die eigentliche Traganordnung beweglich zu lagern. Die Trageanordnung kann von der Fahrstellung in die Ladestellung verlagert werden, ohne dass man die auf ihr aufliegende Last entfernen muss.

Die Tragstruktur untergreift die Trageanordnung zweckmäßigerweise zumindest in der Fahrstellung. Die Trageanordnung liegt vorteilhaft zumindest in der Fahrstellung auf der Tragstruktur auf , z.B. direkt oder indirekt, d.h. z.B. auf einer Linearführung oder einer Schwenklageranordnung. Es ist vorteilhaft, wenn die Trageanordnung auch in der Ladestellung zumindest teilweise oberhalb der Tragstruktur angeordnet ist.

Zweckmäßigerweise macht die Traganordnung auf einem Verstellweg zwischen der Fahrstellung und der Ladestellung eine überlagerte Linear- und Schwenkbewegung durch.

Für die lineare Verfahrbarkeit können beispielsweise eine Linearführung und/oder ein Fahrwagen vorgesehen sein.

Besonders bevorzugt ist jedoch eine Schwenklageranordnung, mit der die Trageanordnung schwenkbar an der Tragstruktur gelagert ist. Es versteht sich, dass eine Schwenklageranordnung auch mit Hilfe einer Linearführung zusätzlich linear verfahrbar sein kann.

Die Trageanordnung nimmt in der Ladestellung zweckmäßigerweise eine vom Kraftfahrzeug abgewandte Schrägstellung ein. Beispielsweise ist die Trageanordnung in der Ladestellung von dem Kraftfahrzeug weg geschwenkt.

Eine Schwenkachse der Schwenklageranordnung verläuft zweckmäßigerweise durch ein Schwenklager oder ein Schwenklagerpaar der Schwenklageranordnung bzw. wird durch dieses Schwenklager definiert. Vorzugsweise ist dann nur eine einzige Schwenkachse vorhanden.

Es ist auch möglich, dass zum Schwenken der Trageanordnung bezüglich der Tragstruktur mehrere Schwenkachsen vorhanden sind.

Es sind aber auch eine oder mehrere räumlich von der Schwenklageranordnung entfernte Schwenkachsen möglich. Diese mindestens eine Schwenkachse kann raumfest oder im Raum beweglich, d.h. nicht raumfest sein.

Vorzugsweise hat die Schwenklageranordnung eine Mehrgelenkanordnung. Beispielsweise sind zwei voneinander in Fahrzeugquerrichtung beabstandete Mehrgelenkanordnungen zum Schwenken der Trageanordnung bezüglich der Tragstruktur vorgesehen.

Besonders bevorzugt ist eine Viergelenkanordnung bzw. ein Viergelenk. Es ist auch möglich, dass mehr oder weniger als 4 Gelenke vorzusehen.

Das Viergelenk kann dazu ausgestaltet sein, dass die Trageanordnung sowohl in der Fahrstellung als auch in der Ladestellung eine im Wesentlichen horizontale Position einnimmt.

Aber auch ein Schwenken in eine Schrägstellung, zumindest eine leicht geneigte Schrägstellung, ist vorteilhaft. Beispielsweise umfasst die Mehrgelenkanordnung einen von dem Heckbereich entfernten Schwenkarm und eine näher beim Heckbereich angeordneten Lenkarm, wobei der Lenkarm länger als der Schwenkarm ist. Dadurch macht die Traganordnung beim Verstellen von der Fahrstellung in die Ladestellung eine Schwenkbewegung, allerdings mit einem größeren Schwenkradius, als dies bei nur einen einzigen Schwenkachse der Fall wäre.

Die Trageanordnung hat zweckmäßigerweise zumindest im beladenen Zustand eine solche Schwerpunktlage, dass sie selbsttätig in der Fahrstellung und/oder in der Ladestellung bleibt. Die Trageanordnung bleibt also hier ohne eine zusätzliche Halterung oder Stütze in der jeweiligen Fahrstellung oder Ladestellung.

Zweckmäßigerweise durchläuft die Trageanordnung zwischen der Fahrstellung und der Ladestellung einen Verstellweg mit einem Kipppunkt. Die Trageanordnung kippt dann sozusagen in die Fahrstellung oder die Ladestellung.

Es versteht sich, dass zum Halten in der Fahrstellung und/oder in der Ladestellung Stützen, Halterungen oder dergleichen vorteilhaft sind. Diese können auch als zusätzliche Sicherheitsmaßnahme vorgesehen sein.

Vorteilhaft ist eine Fußbetätigungseinrichtung zum Betätigen der Trageanordnung. Bei einer Fußbetätigung stehen verhältnismäßig große Betätigungskräfte zur Verfügung.

Die Fußbetätigungseinrichtung wirkt z.B. auf die bezüglich der Tragstruktur beweglich gelagerte Trageanordnung. Beispielsweise ist die Fußbetätigungseinrichtung mit der Trageanordnung fest oder gelenkig verbunden oder gleitet an der Trageanordnung zu deren Betätigung entlang.

Es ist auch möglich, dass die Fußbetätigungseinrichtung z.B. eine Linearführung und/oder Schwenklageranordnung zur beweglichen Lagerung der Trageanordnung bezüglich der Tragstruktur wirkt. Z.B. kann die Fußbetätigungseinrichtung auf einen Schwenkarm der Schwenklageranordnung, insbesondere der Mehrgelenkanordnung oder eines einzelnen Schwenklagers, wirken. Die Fußbetätigungseinrichtung ist z.B. mit einem Schwenkarm fest oder gelenkig verbunden oder wird durch einen Schwenkarm gebildet.

Die Fußbetätigungseinrichtung hat zweckmäßigerweise einen Freigang, so dass sie zwischen einer Ruhestellung, bei der sie außer Eingriff mit der Trageanordnung ist, und einer Arbeitsstellung verstellbar ist, bei der sie zum Verstellen der Trageanordnung mit dieser in Eingriff ist.

Vorzugsweise ist eine Verriegelungseinrichtung zum Verriegeln der Trageanordnung bezüglich der Tragstruktur zumindest in der Fahrstellung vorgesehen. Ein unbeabsichtigtes Schwenken oder lineares Verfahren der Traganordnung die bei im Fahrbetrieb gefährlich sein könnte, wird durch die Verriegelungseinrichtung verhindert.

Die Trageanordnung kann beispielsweise eine Trägerplattform zum Abstellen der Last und/oder eine Sportgerätehalterung umfassen. Die Sportgerätehalterung ist beispielsweise eine Fahrradhalterung. Es versteht sich, dass Sportgerätehalterungen zweckmäßigerweise lösbar mit der Trageanordnung verbindbare Bauteile sind.

Vorteilhaft ist auch ein modulares Erweiterungskonzept, bei dem mindestens ein Erweiterungsbauteil an einem Basis-Träger der Trageanordnung anordenbar oder daran beweglich gelagert ist. Auf diese Weise lässt sich die Ladekapazität der Trageanordnung vergrößern.

Das Erweiterungsbauteil steht beispielsweise in seiner Gebrauchsstellung seitlich, nach hinten oder nach oben vor die Trageanordnung vor.

Das Erweiterungsbauteil umfasst einen oder vorzugsweise zwei S-artige oder S-förmige Trägerstäbe. Die S-artigen Trägerstäbe sind vorzugsweise seitlich an dem Basisträger lösbar befestigbar. Der Basisträger ist z.B. die Tragstruktur oder die bezüglich der Tragstruktur bewegliche Trageanordnung. Durch die S-Form stehen die Trägerstäbe nach schräg hinten oben vor. An dem mindestens einen Erweiterungsbauteil ist beispielsweise mindestens eine weitere Tragplattform oder mindestens eine weitere Sportgerätehalterung anbringbar oder angebracht.

Das Erweiterungsbauteil bildet vorzugsweise eine Betätigungshandhabe zum Verlagern der Trageanordnung in die Ladestellung oder die Fahrstellung. Es kann auch eine Betätigungshandhabe, z.B. ein Handgriff, an dem Erweiterungsbauteil angeordnet sein.

Erfindungsgemäß ist vorgesehen, dass die Tragstruktur eine Halterung zum lösbaren Anordnen an einer Anhängekupplung des Kraftfahrzeugs aufweist.

Nachfolgend werden Ausführungsbeispiele der Erfindung anhand der Zeichnung erläutert. Es zeigen:

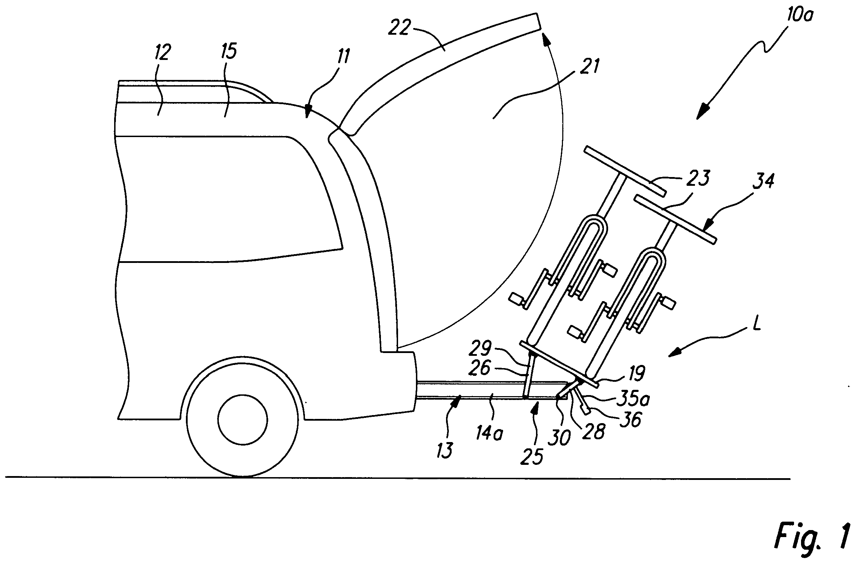

- Figur 1: eine schematische Seitenansicht eines ersten Ausführungsbeispiels eines erfindungsgemäßen Lastenträgers in Ladestellung,

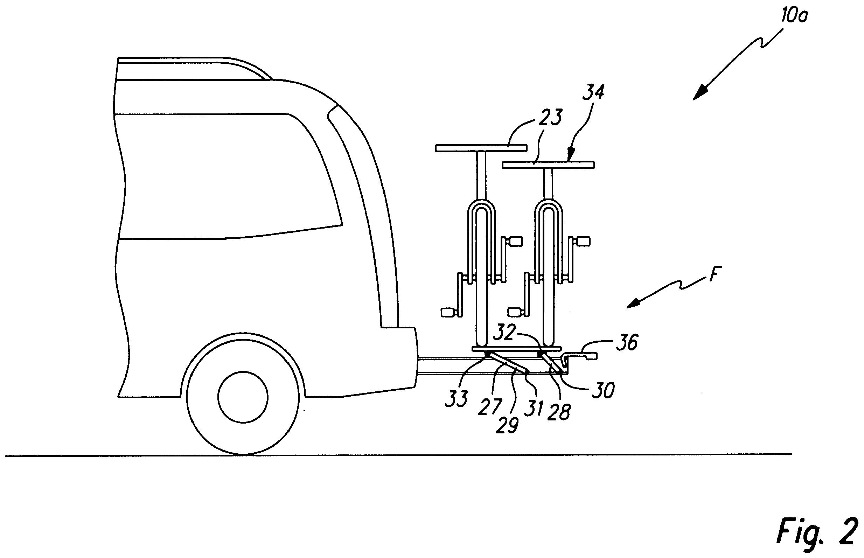

- Figur 2: den Lastenträger gemäß Figur 1 in Fahrstellung,

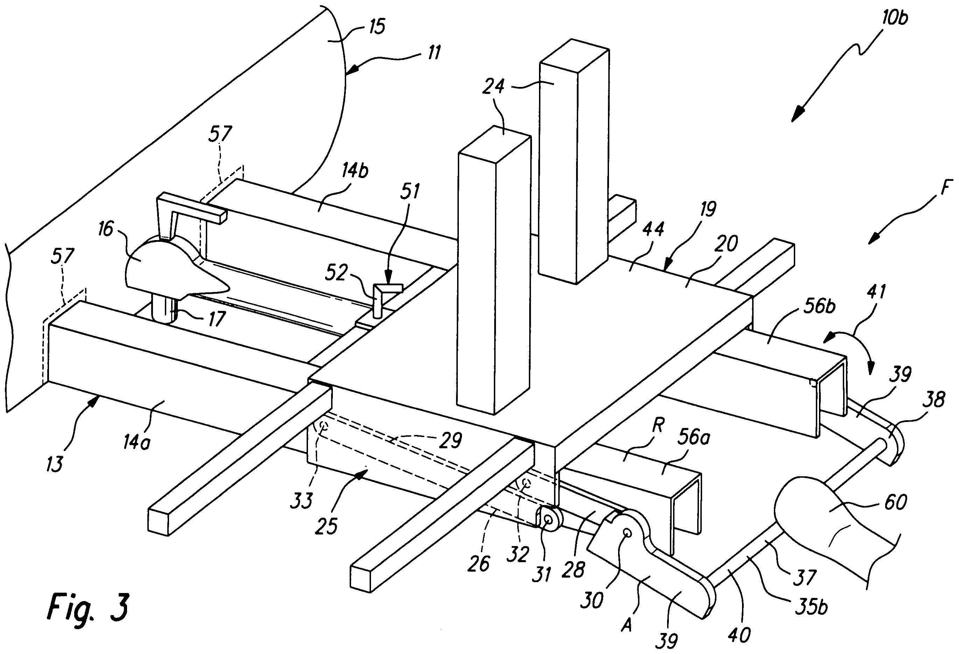

- Figur 3: eine perspektivische Ansicht eines zweiten Ausführungsbeispiels der Erfindung in Gestalt eines Lastenträgers in Fahrstellung,

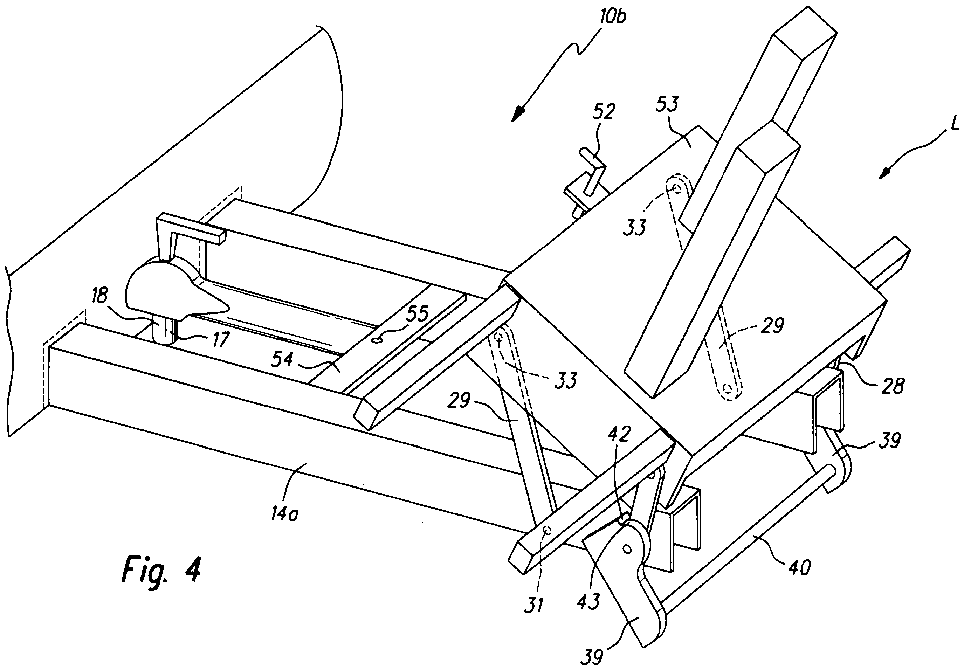

- Figur 4: den Lastenträger gemäß Figur 1 in Ladestellung, und

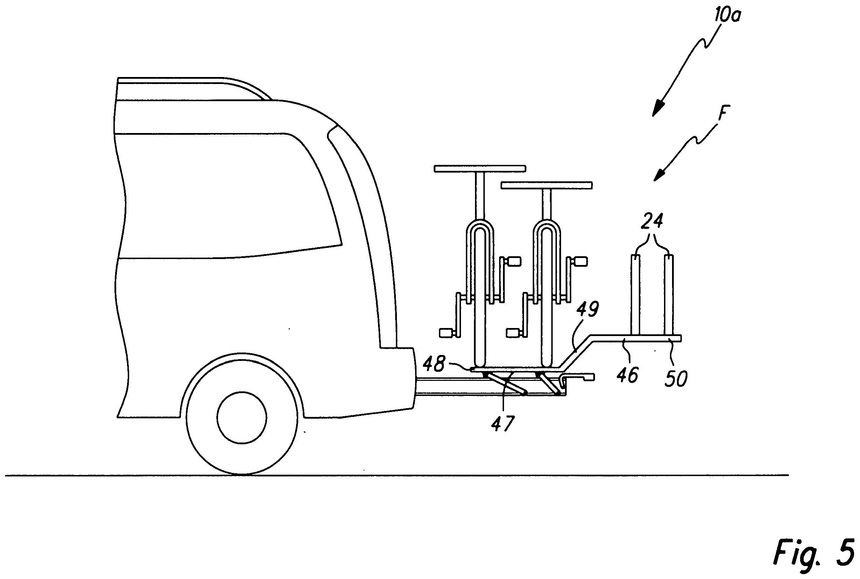

- Figur 5: den Lastenträger gemäß Figur 1 mit Erweiterungsbauteilen.

Bei den nachfolgend anhand von Lastenträgern 10a, 10b beschriebenen Ausführungsbeispielen sind gleiche Komponenten mit denselben Bezugszeichen versehen. Für den Lastenträger 10a spezifische Bauteile sind mit "a" gekennzeichnet, für den Lastenträger 10b spezifische Bauteile mit "b".

Der Lastenträger 10a ist einem Heckbereich 11 eines Kraftfahrzeugs 12 angeordnet. Eine Tragstruktur 13 mit zwei Längsträgern 14a, 14b ist fahrzeugfest mit dem Kraftfahrzeug 12 verbunden.

Beispielsweise sind die Längsträger 14a, 14b in schematisch dargestellte Aufnahmen 57 an der Karosserie 15 von hinten her eingesteckt.

Die Tragstruktur 13 kann auch mit einer Anhängekupplungs-Halterung 16 an einem Kugelhals 17 einer Anhängekupplung 18 des Kraftfahrzeugs 12 lösbar befestigt sein. Die Längsträger 14a, 14b und die Anhängekupplungs-Halterung 16 sind durch einen oder mehrere Querträger 54 verbunden.

An den Längsträgern 14 ist eine Trageanordnung 19 mit einem Tragegestell 20 zwischen einer Fahrstellung F und einer Ladestellung L beweglich gelagert. In der Ladestellung L ist die Trageanordnung 19 bezüglich des Kraftfahrzeugs 12 nach schräg hinten weg geschwenkt, so dass sie einen Schwenkbereich 21 einer Heckklappe 22 frei gibt. Die Heckklappe 22 kann an Fahrrädern 23 vorbeischwenken, die auf der Trageanordnung 19 mit Sportgerätehaltern 24 befestigt sind. Die Fahrräder 23 sind eine auf der Trageanordnung 19 abgestellte Last 34.

Zum Verstellen, insbesondere zum Schwenken, der Trageanordnung 19 bezüglich der Tragstruktur 13 ist zwischen diesen beiden Bauteilen eine Schwenklageranordnung 25 vorgesehen.

Die Schwenklageranordnung 25 umfasst zwei Mehrgelenkanordnungen 26a, 26b, die vorliegend als Viergelenke 27a, 27b ausgestaltet sind.

Die Viergelenke 27a, 27b enthalten Schwenkarme 28 und Lenkarme 29, die an Schwenklagern 30, 31 schwenkbar an den Längsträgern 14a, 14b gelagert sind. Die Schwenklager 30, 31 befinden sich an einem Längsende der Arme 28, 29. An einem diesem Längsende entgegengesetzten Längsende sind weitere Schwenklager 32, 33 zwischen den Armen 28 und 29 einerseits und der Trageanordnung 19 andererseits vorhanden.

Wenn gleich lange Schwenkarme und Lenkarme vorgesehen sind, würde die Trageanordnung beim Schwenken von der Fahrstellung F in die Ladestellung L und umgekehrt eine parallelogrammartige Bewegung durchlaufen, d.h. ihre Oberseite wäre stets horizontal oder zumindest im Wesentlichen horizontal.

Beim Ausführungsbeispiel sind allerdings die Schwenkarme 28 kürzer als die Lenkarme 29. Dadurch schwenkt die Trageanordnung 19, so dass sie in der Ladestellung L schräg vom Fahrzeugheck des Kraftfahrzeugs 12 weg steht. Diese Maßnahme vergrößert den Schwenkbereich 21.

Zum Betätigen der Trageanordnung 19, insbesondere zum Verlagern der Fahrstellung F in die Ladestellung L, sind Fußbetätigungseinrichtungen 35a, 35b zweckmäßig.

Die Fußbetätigungseinrichtung 35a enthält beispielsweise ein Pedal 36, das mit einem der kürzeren Schwenkarme 28 wirkverbunden ist. Zweckmäßigerweise ist das Pedal 36 drehfest und schwenkfest mit dem Schwenkarm 28 verbunden. Auch eine einstückige Bauweise, bei der der Schwenkarm 28 sozusagen zu dem Pedal 36 hin verlängert ist, ist denkbar.

Das Pedal 36 steht winkelig vor den Schwenkarm 28 vor. Durch eine einfache Fußbetätigung des Pedals 36 kann die Trageanordnung 19 in die Ladestellung L geschwenkt werden.

Bei dem Lastenträger 10b ist ein alternatives Betätigungskonzept vorgesehen. Seine Fußbetätigungseinrichtung 35b umfasst beispielsweise ein Betätigungsteil 37, das in Fahrzeugquerrichtung des Kraftfahrzeugs 12 verläuft.

Das Betätigungsteil 37 ist schwenkbar an der Tragstruktur 13 angeordnet. Das Betätigungsteil 37 greift an zwei zueinander beabstandeten Angriffspunkten an der Trageanordnung oder der Schwenklageranordnung an.

Das Betätigungsteil 37 umfasst einen Schwenkbügel 38 mit Armen 39, zwischen denen eine mit z.B. einem Fuß 60 betätigbare Betätigungsstange 40 verläuft. Die Betätigungsstange 40 ist beispielsweise an die Arme 39 an deren einem Längsende angeschweißt.

Anstelle des aus mehreren Komponenten gebildeten Schwenkbügels 38 könnte auch ein einstückiger Schwenkbügel vorgesehen sein. Nun wäre es möglich, dass beispielsweise die Schwenkarme 28 zu den Armen 39 hin verlängert und mit diesen verbunden sind oder die Arme 39 bilden. Dann würde die Betätigungsstange 40 stets eine mit der Schwenkstellung der Schwenkarme 28 korrespondierende Schwenklage einnehmen. Beim Ausführungsbeispiel ist jedoch ein anderes Lager-Konzept gewählt:

Die Arme 39 sind schwenkbar an der Tragstruktur 13 gelagert. Für eine Schwenklagerung eines erfindungsgemäßen Betätigungsteils können zwar separate Schwenklager an der Tragstruktur vorgesehen sein. Die Arme 39 sind jedoch mit in die Schwenklager 30 der kürzeren Schwenkarme 28 schwenkbeweglich eingebunden. Die Betätigungsstange 40 ist an den Schwenklagern 30 relativ zu den Schwenkarmen 28 schwenkbar gelagert.

Somit ist ein Freigang 41 vorhanden, bei dem der Schwenkbügel 38 zwischen einer Ruhestellung R, bei der Betätigungsenden 42 der Arme 39 außer Eingriff mit den Schwenkarmen 28 sind, und einer Arbeitsstellung A verstellbar ist, bei der die Betätigungsenden 42 an den Schwenkarmen 28 angreifen. Beispielsweise sind hierfür Betätigungsausnehmungen 43 an den Betätigungsenden 42 vorgesehen.

Es ist vorteilhaft, wenn die Fußbetätigungseinrichtung 35b eine solche Schwerpunktlage aufweist, dass sie selbstständig in der Ruhestellung R bleibt.

Der die Fußbetätigungseinrichtung 35b ist in ihrer Ruhestellung R beispielsweise nach oben geschwenkt. Die Fußbetätigungseinrichtung 35b braucht dann z.B. weniger Platz.

Zweckmäßigerweise liegt die Betätigungsstange 40 in ihrer Ruhestellung R auf den beiden Längsträgern 14a, 14b an Positionen 56a, 56b auf.

Die Lastenträger 10a, 10b weisen ein flexibles Erweiterungskonzept auf.

Das Tragegestell 20 enthält einen Basis-Träger 44, dessen durch eine Tragplattform 53 bereitgestellte Ladekapazität durch Erweiterungsbauteile 45 vergrößert werden kann. Die Erweiterungsbauteile 45 sind beispielsweise Trägerstäbe 46, die nach hinten vor den Basisträger 44 vorstehen.

Vor die Tragplattform 53 stehen ferner als Erweiterungsbauteile Tragelemente 58 vor, z.B. zum Abstellen der Fahrräder 23. Die Tragelemente 58 sind zweckmäßigerweise teleskopierbar und/oder bezüglich der Basis-Trägers 44 verschieblich, so dass sie bei Nichtgebrauch unter die Tragplattform 53 geschoben werden können.

Die Trägerstäbe 46 haben einen stufigen oder S-artigen Verlauf. Befestigungsabschnitte 47 der Trägerstäbe 46, die in der Fahrstellung F einen im Wesentlichen horizontalen Verlauf haben, sind an in Fahrzeuglängsrichtung verlaufenden Tragelementen 48 des Tragegestells 20 befestigt. Somit verlaufen die Befestigungsabschnitte 47 korrespondierend mit den Tragelementen 48. Die Befestigungsabschnitte 47 können z.B. seitlich an den Tragelementen 48 befestigt werden. Zur Befestigung können beispielsweise Sicherungssplinte, Bolzen oder dergleichen vorgesehen sein. Vorzugsweise sind die Befestigungsabschnitte 47 L-förmig oder U-förmig, so dass sie auf die Tragelemente 48 sozusagen aufgesattelt werden können und sich auf den Tragelementen 48 zumindest oberseitig abstützen.

An die Befestigungsabschnitte 47 schließen sich Schrägabschnitte 49 der Trägerstäbe 46 an. Die Schrägabschnitte 49 verlaufen in der Fahrstellung F schräg weg vom Kraftfahrzeug 12 geneigt. An die Schrägabschnitte 49 schließen sich Tragabschnitte 50 der Trägerstäbe 46 an, die in der Fahrstellung F im Wesentlichen horizontal verlaufen. Auf den Tragabschnitten 50 können beispielsweise eine Tragplattform oder Last-Halterungen, z.B. Sportgerätehalter 24, befestigt werden.

Die Tragabschnitte 50 oder daran angeordnete Sportgerätehalter 24 bilden vorzugsweise Betätigungshandhaben zum Verstellen der Trageanordnung 19 von der Fahrstellung F in die Ladestellung L und/oder umgekehrt. Die Tragabschnitte 50 und/oder die Sportgerätehalter 24 kragen bezüglich der Schwenklager 30 verhältnismäßig weit aus und bilden somit Betätigungsarme oder Betätigungshebel, die eine leichte manuelle Betätigung der Trageanordnung 19 bei einem Verstellen von der Fahrstellung F in die Ladestellung L und umgekehrt ermöglichen. Die Bedienbarkeit des Lastenträgers 10b ist somit nicht eingeschränkt, auch wenn beispielsweise das Fuß-Betätigungsteil 37 durch die Erweiterung mit Hilfe der Erweiterungsbauteile 45 schwerer zugänglich ist.

Die Trageanordnung 19 kann mit einer Verriegelungseinrichtung 51 bezüglich der Tragstruktur 13 verriegelt werden. Die Verriegelungseinrichtung 51 enthält beispielsweise ein mit der Trageanordnung 19 fest verbundenes, jedoch bewegliches Verriegelungselement 52, beispielsweise eine Verriegelungsschraube oder einen Verriegelungsbolzen, das zum Verriegeln in eine Verriegelungsaufnahme 55 der Tragstruktur 19 eingreift.

## Patentansprüche

1. Lastenträger für ein Kraftfahrzeug (12), insbesondere einen Personenkraftwagen, mit einer Tragstruktur (13) zum Tragen einer Last (34), die in einer Arbeitsstellung des Lastenträgers nach hinten vor einen Heckbereich (11) des Kraftfahrzeugs (12) vorsteht, wobei der Lastenträger (10a) eine bezüglich der Tragstruktur (13) zwischen einer für einen Fahrbetrieb des Kraftfahrzeugs (12) vorgesehenen Fahrstellung (F) und einer zum Be- und Entladen des Kraftfahrzeugs (12) vorgesehenen Ladestellung (L) verstellbare Trageanordnung (19) zum Auflegen der Last (34) aufweist, wobei die Trageanordnung (19) mit der auf ihr angeordneten Last (34) in der Ladestellung (L) einen Schwenkbereich (21) einer Heckklappe (22) oder einer Hecktür des Kraftfahrzeugs (12) freigibt, **dadurch gekennzeichnet, dass** die Tragstruktur (13) ein an dem Kraftfahrzeug (12) verschieblich angeordnetes Trägerteil umfasst, insbesondere eine vor eine Karosserie (15) des Kraftfahrzeugs (12) nach hinten ausziehbare Tragplattform, aufweist, und dass die Tragstruktur (13) eine Halterung (16) zum lösbaren Anordnen an einer Anhängekupplung (18) des Kraftfahrzeugs (12) aufweist.

2. Lastenträger nach Anspruch 1, **dadurch gekennzeichnet, dass** die Trageanordnung (19) auf einem Verstellweg zwischen der Fahrstellung (F) der Ladestellung (L) einer überlagerte Linear- und Schwenkbewegungsbahn durchläuft.

3. Lastenträger nach einem der vorhergehenden Ansprüche, **dadurch gekennzeichnet, dass** die Trageanordnung (19) in der Ladestellung (L) eine vom Kraftfahrzeug (12) abgewandte Schrägstellung einnimmt.

4. Lastenträger nach einem der vorhergehenden Ansprüche, **dadurch gekennzeichnet, dass** die Trageanordnung (19) an der Tragstruktur (13) linear verfahrbar geführt ist und/oder an einer Schwenklageranordnung (25) schwenkbar gelagert ist, wobei Schwenklageranordnung (25) zweckmäßigerweise eine Mehrgelenkanordnung (26a, 26b), insbesondere ein Viergelenk (27a, 27b), umfasst.

5. Lastenträger nach Anspruch 4, **dadurch gekennzeichnet, dass** die Mehrgelenkanordnung (26a, 26b) einen von dem Heckbereich (11) entfernten Schwenkarm (28) und einen näher beim Heckbereich (11) angeordneten Lenkarm (29) aufweist, wobei der Lenkarm (29) vorteilhaft länger als der Schwenkarm (28) ist.

6. Lastenträger nach einem der vorhergehenden Ansprüche, **dadurch gekennzeichnet, dass** die Trageanordnung (19) zumindest im beladenen Zustand eine solche Schwerpunktlage aufweist, dass sie selbsttätig in der Fahrstellung (F) und/oder in der Ladestellung (L) bleibt.

7. Lastenträger nach einem der vorhergehenden Ansprüche, **dadurch gekennzeichnet, dass** die Trageanordnung (19) auf einem Verstellweg zwischen der Fahrstellung (F) und der Ladestellung (L) einen Kipppunkt durchläuft.

8. Lastenträger nach einem der vorhergehenden Ansprüche, **dadurch gekennzeichnet, dass** er eine Fußbetätigungseinrichtung (35) zum Verlagern der Trageanordnung (19) in die Ladestellung (L) und/oder die Fahrstellung (F) aufweist.

9. Lastenträger nach Anspruch 8, **dadurch gekennzeichnet, dass** die Fußbetätigungseinrichtung (35) unmittelbar auf die Trageanordnung (19) wirkt oder mit der Trageanordnung (19) fest oder gelenkig verbunden ist und/oder dass die Fußbetätigungseinrichtung (35) auf eine Lagerung der Trageanordnung (19) bezüglich der Tragstruktur (13) wirkt oder mit der Lagerung fest oder gelenkig verbunden ist und/oder dass die Fußbetätigungseinrichtung (35) ein mit zwei in Fahrzeugquerrichtung zueinander beabstandeten Bauteilen der Trageanordnung (19) und/oder der Schwenklageranordnung (25) verbundenes Betätigungsteil (37) aufweist und/oder dass die Fußbetätigungseinrichtung (35) ein Pedalelement (36) umfasst, das in einer Wirkstellung einen Arm der Schwenklageranordnung (25) verlängert oder mit dem Arm verbunden ist und/oder dass die Fußbetätigungseinrichtung (35) einen Freigang (41) aufweist, so dass sie zwischen einer Ruhestellung (R), bei der sie außer Eingriff mit der Trageanordnung (19) ist, und einer Arbeitsstellung (A) verstellbar ist, bei der sie zum Verstellen der Trageanordnung (19) mit dieser in Eingriff ist.

10. Lastenträger nach einem der vorhergehenden Ansprüche, **dadurch gekennzeichnet, dass** er eine Verriegelungseinrichtung (51) zum Verriegeln der Trageanordnung (19) bezüglich der Tragstruktur (13) zumindest in der Fahrstellung (F) aufweist.

11. Lastenträger nach einem der vorhergehenden Ansprüche, **dadurch gekennzeichnet, dass** die Trageanordnung (19) eine Trägerplattform zum Abstellen der Last (34) und/oder eine Sportgerätehalterung (24), insbesondere eine Fahrradhalterung, aufweist.

12. Lastenträger nach einem der vorhergehenden Ansprüche, **dadurch gekennzeichnet, dass** die Trageanordnung (19) mindestens lösbar an einem Basis-Träger (44) der Trageanordnung (19) anordenbares oder daran beweglich gelagertes Erweiterungsbauteil (45) zum Vergrößern der Ladekapazität der Trageanordnung (19) aufweist.

13. Lastenträger nach Anspruch 12, **dadurch gekennzeichnet, dass** das mindestens eine Erweiterungsbauteil (45) in Gebrauchsstellung nach hinten und/oder nach oben vor die Trageanordnung (19) vorsteht und/oder dass das mindestens eine Erweiterungsbauteil (45) einen S-artigen oder S-förmigen Trägerstab (46) umfasst und/oder dass das mindestens eine Erweiterungsbauteil (45) eine Betätigungshandhabe zum Verlagern der Trageanordnung (19) in die Ladestellung (L) und/oder die Fahrstellung (F) aufweist oder bildet.

14. Lastenträger nach einem der vorhergehenden Ansprüche, **dadurch gekennzeichnet, dass** die Trageanordnung (19) zumindest in der Fahrstellung (F) oberhalb oder auf der Tragstruktur (13) angeordnet ist.

## Claims

1. Load carrier for a motor vehicle (12), in particular a car, with a support structure (13) for carrying a load (34) which, in an operating position of the load carrier, extends to the rear beyond a rear section (11) of the motor vehicle (12), wherein the load carrier (10a) has a support assembly (19) for placing the load (34), adjustable relative to the support structure (13), between a vehicle running position (F) provided for operation of the motor vehicle (12) and a loading position (L) provided for loading and unloading of the motor vehicle (12), wherein the support assembly (19) with the load (34) mounted on it releases in the loading position (L) a swivelling section (21) of a tailgate (22) or a rear door of the motor vehicle (12), **characterised in that** the support structure (13) includes a carrier element mounted slidably on the motor vehicle (12), in particular a carrier platform which may be pulled out rearwards beyond the body (15) of the motor vehicle (12), and that the support structure (13) has a mounting (16) for releasable fitting to a trailer coupling (18) of the motor vehicle (12).

2. Load carrier according to claim 1, **characterised in that** the support assembly (19), on an adjustment path between vehicle running position (F) and loading position (L), passes through a superimposed linear and swivel movement track.

3. Load carrier according to any of the preceding claims, **characterised in that** the support assembly (19) in the loading position (L) adopts an inclined position facing away from the motor vehicle (12).

4. Load carrier according to any of the preceding claims, **characterised in that** the support assembly (19) is guided on the support structure (13) with a linear traversing facility, and/or is pivotably mounted on a swivel bearing assembly (25), wherein the swivel bearing assembly (25) expediently comprises a multi-linkage arrangement (26a, 26b), in particular a four-bar linkage (27a, 27b).

5. Load carrier according to claim 4, **characterised in that** the multi-linkage arrangement (26a, 26b) has a swivel arm (28) located away from the rear section (11) and a steering arm (29) located closer to the rear section (11), wherein the steering arm (29) is advantageously longer than the swivel arm (28).

6. Load carrier according to any of the preceding claims, **characterised in that** the support assembly (19) has, at least in the loaded state, a centre of gravity such that it remains automatically in the vehicle running position (F) and/or in the loading position (L).

7. Load carrier according to any of the preceding claims, **characterised in that** the support assembly (19), on an adjustment path between the vehicle running position (F) and the loading position (L), runs though a tipping point.

8. Load carrier according to any of the preceding claims, **characterised in that** it has a pedal-operated device (35) to shift the support assembly (19) into the loading position (L) and/or the vehicle running position (F).

9. Load carrier according to claim 8, **characterised in that** the pedal-operated device (35) acts directly on the support assembly (19) or is immovably connected or hinged to the support assembly (19), and/or that the pedal-operated device (35) acts on a bearing of the support assembly (19) relative to the support structure (13) or is immovably connected or hinged to the bearing, and/or that the pedal-operated device (35) has an actuating element (37) connected to two components of the support assembly (19) spaced apart in the vehicle transverse direction and/or of the swivel bearing assembly (25), and/or that the pedal-operated device (35) includes a pedal element (36) which, in an operative position, lengthens an arm of the swivel bearing assembly (25) or is connected to the arm, and/or that the pedal-operated device (35) has a clearance (41) so that it may be adjusted between a rest position (R) in which it is disengaged from the support assembly (19), and an operating position (A) in which it is engaged with the support assembly (19) for adjustment of the latter.

10. Load carrier according to any of the preceding claims, **characterised in that** it has a locking device (51) for locking the support assembly (19) relative to the support structure (13), at least in the vehicle running position (F).

11. Load carrier according to any of the preceding claims, **characterised in that** the support assembly (19) has a carrier platform for setting down the load (34) and/or a sports equipment rack (24), in particular a cycle rack.

12. Load carrier according to any of the preceding claims, **characterised in that** the support assembly (19) has at least one extension member (45), for increasing the loading capacity of the support assembly (19), which may be fitted releasably to a base carrier (44) of the support assembly (19) or mounted movably thereon.

13. Load carrier according to claim 12, **characterised in that** the extension member or members (45) extend rearwards and/or upwards beyond the support assembly (19) in the position of use, and/or that the extension member or members (45) have an S-like or S-shaped support bar (46), and/or that the extension member or members (45) has or have or forms or form an operating handle to shift the support assembly (19) into the loading position (L) and/or the vehicle running position (F).

14. Load carrier according to any of the preceding claims, **characterised in that** the support assembly (19), at least in the vehicle running position (F), is located above or on the support structure (13).

## Revendications

1. Support de charges pour un véhicule automobile (12), en particulier un véhicule de tourisme, avec une structure porteuse (13) servant à supporter une charge (34), qui fait saillie, dans une position de travail du support de charges, vers l'arrière d'une zone arrière (11) du véhicule automobile (12), dans lequel le support de charges (10a) présente un ensemble porteur (19) pouvant être ajusté par rapport à la structure porteuse (13) entre une position de déplacement (F) prévue pour un mode de déplacement du véhicule automobile (12) et une position de chargement (L) prévue pour le chargement et le déchargement du véhicule automobile (12), servant à recevoir la charge (34), dans lequel l'ensemble porteur (19) avec la charge (34) disposée sur celui-ci libère dans la position de chargement (L) une zone de pivotement (21) d'un hayon (22) ou d'une portière arrière du véhicule automobile (12), **caractérisé en ce que** la structure porteuse (13) comprend une partie de support disposée de manière à pouvoir coulisser au niveau du véhicule automobile (12), en particulier présente une plate-forme porteuse pouvant être tirée vers l'arrière devant une carrosserie (15) du véhicule automobile (12), et que la structure porteuse (13) présente une fixation (16) destinée à être disposée de manière amovible au niveau d'un attelage de remorque (18) du véhicule automobile (12).

2. Support de charges selon la revendication 1, **caractérisé en ce que** l'ensemble porteur (19) traverse, sur un trajet d'ajustement entre la position de déplacement (F) et la position de chargement (L), une trajectoire de déplacement linéaire et de pivotement superposée.

3. Support de charges selon l'une quelconque des revendications précédentes, **caractérisé en ce que** l'ensemble porteur (19) adopte, dans la position de chargement (L), une position inclinée opposée au véhicule automobile (12).

4. Support de charges selon l'une quelconque des revendications précédentes, **caractérisé en ce que** l'ensemble porteur (19) est guidé de manière à pouvoir être déplacé linéairement au niveau de la structure porteuse (13) et/ou est monté de manière à pouvoir pivoter au niveau d'un ensemble formant palier de pivotement (25), dans lequel l'ensemble formant palier de pivotement (25) comprend de manière appropriée un ensemble d'articulations multiples (26a, 26b), en particulier un quadrilatère articulé (27a, 27b).

5. Support de charges selon la revendication 4, **caractérisé en ce que** l'ensemble d'articulations multiples (26a, 26b) présente un bras de pivotement (28) éloigné de la zone arrière (11) et un bras de direction (29) disposé davantage à proximité de la zone arrière (11), dans lequel le bras de direction (29) est avantageusement plus long que le bras de pivotement (28).

6. Support de charges selon l'une quelconque des revendications précédentes, **caractérisé en ce que** l'ensemble porteur (19) présente au moins dans l'état chargé un centre de gravité tel qu'il reste de manière autonome dans la position de déplacement (F) et/ou dans la position de chargement (L).

7. Support de charges selon l'une quelconque des revendications précédentes, **caractérisé en ce que** l'ensemble porteur (19) traverse un point de basculement sur un trajet d'ajustement entre la position de déplacement (F) et la position de chargement (L).

8. Support de charges selon l'une quelconque des revendications précédentes, **caractérisé en ce qu'**il présente un dispositif d'actionnement au pied (35) servant à déplacer l'ensemble porteur (19) dans la position de chargement (L) et/ou dans la position de déplacement (F).

9. Support de charges selon la revendication 8, **caractérisé en ce que** le dispositif d'actionnement au pied (35) agit directement sur l'ensemble porteur (19) ou est relié de manière solidaire ou de manière articulée à l'ensemble porteur (19), et/ou que le dispositif d'actionnement au pied (35) agit sur un palier de l'ensemble porteur (19) par rapport à la structure porteuse (13) ou est relié de manière solidaire ou de manière articulée au palier, et/ou que le dispositif d'actionnement au pied (35) présente une partie d'actionnement (37) reliée à deux composants, espacés l'un de l'autre dans le sens transversal de véhicule, de l'ensemble porteur (19) et/ou à l'ensemble formant palier de pivotement (25), et/ou que le dispositif d'actionnement au pied (35) comprend un élément formant pédale (36), qui prolonge, dans une position active, un bras de l'ensemble formant palier de pivotement (25) ou est relié au bras, et/ou que le dispositif d'actionnement au pied (35) présente un passage libre (41) de sorte qu'il puisse être ajusté entre une position de repos (R), dans laquelle il n'est pas en prise avec l'ensemble porteur (19), et une position de travail (A), dans laquelle il est en prise avec l'ensemble porteur (19) pour ajuster ce dernier.

10. Support de charges selon l'une quelconque des revendications précédentes, **caractérisé en ce qu'**il présente un dispositif de verrouillage (51) servant à verrouiller l'ensemble porteur (19) par rapport à la structure porteuse (13) au moins dans la position de déplacement (F).

11. Support de charges selon l'une quelconque des revendications précédentes, **caractérisé en ce que** l'ensemble porteur (19) présente une plate-forme de support servant à déposer la charge (34) et/ou une fixation d'équipement sportif (24), en particulier une fixation pour vélo.

12. Support de charges selon l'une quelconque des revendications précédentes, **caractérisé en ce que** l'ensemble porteur (19) présente au moins un composant d'extension (45) pouvant être disposé de manière amovible au niveau d'un support de base (44) de l'ensemble porteur (19) ou monté de manière mobile au niveau de ce dernier, servant à augmenter la capacité de chargement de l'ensemble porteur (19).

13. Support de charges selon la revendication 12, **caractérisé en ce que** l'au moins un composant d'extension (45) fait saillie dans la position d'utilisation vers l'arrière et/ou vers le haut de l'ensemble porteur (19), et/ou que l'au moins un composant d'extension (45) comprend une barre de support (46) de type S ou en forme de S, et/ou que l'au moins un composant d'extension (45) présente ou forme une poignée d'actionnement servant à déplacer l'ensemble porteur (19) dans la position de chargement (L) et/ou dans la position de déplacement (F).

14. Support de charges selon l'une quelconque des revendications précédentes, **caractérisé en ce que** l'ensemble porteur (19) est disposé au moins dans la position de déplacement (F) au-dessus ou sur la structure porteuse (13).
